# EUROPEAN PATENT SPECIFICATION

(11) **EP 3 518 552 B1**
(45) Date of publication and mention of the grant of the patent: **25.11.2020**
(21) Application number: 17852739.6
(22) Date of filing: 18.08.2017
(51) Int. Cl.: H05B 47/10, G10K 15/00, H04Q 9/00, H04Q 9/04, H04R 3/00, H04R 1/00

(54) **REPRODUCTION DEVICE, REPRODUCTION METHOD, PROGRAM, AND REPRODUCTION SYSTEM**
WIEDERGABEVORRICHTUNG, WIEDERGABEVERFAHREN, PROGRAMM UND WIEDERGABESYSTEM
APPAREIL DE REPRODUCTION, PROCÉDÉ DE REPRODUCTION, PROGRAMME, ET SYSTÈME DE REPRODUCTION

(30) Priority: 23.09.2016 JP 2016185728
(43) Date of publication of application: 31.07.2019
(73) Proprietor: Sony Corporation, Tokyo 108-0075 (JP)
(72) Inventor: HONDA, Kazuhiro, Tokyo 141-0032 (JP); NAGATOMO, Yasunori, Tokyo 141-0032 (JP); JIKEYA, Mitsuru, Tokyo 141-0032 (JP)
(74) Representative: 2SPL Patentanwälte PartG mbB
(86) International application number: PCT/JP2017/029626
(87) International publication number: WO 2018/055959

(56) References cited:
- WO-A1-95/24250
- WO-A1-2015/092984
- JP-A- 2003 047 098
- JP-A- 2004 348 143
- JP-A- 2007 025 618
- JP-A- 2008 147 860
- JP-A- 2008 283 305
- JP-A- 2010 054 530
- JP-A- 2011 075 730
- US-A1- 2005 160 270

## Description

### Technical Field

The present technology relates to a reproduction apparatus, a reproduction method, a program, and a reproduction system of audio content.

### Background Art

In the past, a system in which a home network is established in a house and a reproduction apparatus connected thereto reproduces content such as music and video has been known. For example, Patent Literature 1 describes a method of controlling multi-room reproduction in which a plurality of reproduction apparatuses connected to a network forms a group and the group executes synchronous reproduction of the same content (see, for example, paragraphs [0043] to [0046] and Fig. 8 of Patent Literature 1).

Further, Patent Literature 2 describes an audio reproduction apparatus including an illumination device including a plurality of LEDs or the like. In this audio reproduction apparatus, audio data to be reproduced is analyzed. Then, in accordance with the analysis result, light emission timing, brightness, and the like of the illumination device are appropriately controlled. This makes it possible to enjoy the reproduction of the audio content with not only the auditory sense but also the visual sense and experience high excitement and an uplifting feeling (see, for example, paragraphs [0026] to [0041] and Figs. 6 to 14 of Patent Literature 1).

Patent Literature 3 describes a synthesized music, sound and light system that is incorporated into articles of clothing such as a pair of shoes. The system, when activated, allows a multiplicity of lights to illuminate in synchrony with the rhythmic beat of either an internal or an external music or sound program that is heard through an audio transducer. Patent Literature 4 relates to enhancing the enjoyment of the music. Wearable transducers, such as light emitting diodes, respond to signals related to the beat of the music. Signals can be automatically generated, or manually specified, and signals thereafter stored for playback with the music to which it is related. Wearable transducers associated with individuals at a large music event can be set to receive common signals such that the transducers respond in synchrony with one another.

### Citation List

### Patent Literature

Patent Literature 1: WO 2016/103546
Patent Literature 2: WO 2014/103118
Patent Literature 3: WO 95/24250
Patent Literature 4: US 2005/0160270 A1

### Disclosure of Invention

### Technical Problem

It is expected that the technology for reproducing audio content by a plurality of reproduction apparatuses will continue to spread in the future. There is a demand for a technology capable of providing a viewing experience with high quality to a user.

In view of the circumstances as described above, it is an object of the present technology to provide a reproduction apparatus, a reproduction method, a program, and a reproduction system that are capable of providing a viewing experience with high quality to a user.

### Solution to Problem

In order to achieve the above-mentioned object, a reproduction apparatus according to an embodiment of the present technology is a reproduction apparatus capable of executing synchronous reproduction of audio content with a different reproduction apparatus, the reproduction apparatus including: an illumination unit; an acquisition unit; a generation unit; a transmission unit; and a synchronization control unit.

The acquisition unit acquires audio information.

The generation unit generates illumination control information associated with the acquired audio information.

The transmission unit transmits, to the different reproduction apparatus, synchronization control information that includes the audio information and the illumination control information.

The synchronization control unit executes synchronous reproduction of the audio content with the different reproduction apparatus and synchronous control of the illumination unit, on a basis of the synchronization control information.

In his reproduction apparatus, illumination control information associated with audio information is generated. Synchronization control information including the generated illumination control information and the audio information is transmitted to a different reproduction apparatus. Accordingly, it is possible to execute synchronous reproduction of the audio content and synchronous control of the illumination unit, on the basis of the synchronization control information. As a result, it is possible to provide a viewing experience with high quality to a user.

The generation unit may generate, as the synchronization control information, a packet of the audio information, the packet having a header to which the illumination control information is added.

Accordingly, it is possible to easily execute synchronous reproduction of the audio content and synchronous control of the illumination unit.

The generation unit may generate the illumination control information by analyzing the acquired audio information.

Accordingly, it is possible to execute illumination control synchronized with the audio content with high precision.

The illumination control information may include a plurality of illumination patterns and start timings of the plurality of illumination patterns.

Accordingly, it is possible to execute various types of illumination control and provide a viewing experience with high quality.

The illumination control information may include an illumination color.

Accordingly, it is possible to execute various types of illumination control and provide a viewing experience with high quality.

The generation unit may classify the audio content into a plurality of reproduction states on a basis of the audio information, and associate the plurality of reproduction states with illumination patterns.

Accordingly, it is possible to execute illumination control synchronized with the audio content with high precision.

The generation unit may classify the plurality of reproduction states on a basis of beat included in the audio content.

Accordingly, it is possible to execute illumination control synchronized with the audio content with high precision.

The generation unit may generate the illumination control information in association with apparatus designation information for designating the different reproduction apparatus.

Accordingly, it is possible to perform illumination control in which a different reproduction apparatus is designated, and provide a viewing experience with high quality.

The generation unit may classify the illumination unit into a plurality of classified illumination units in accordance with predetermined rules, and generate the illumination control information in association with classification designation information for designating each of the plurality of classified illumination units.

Accordingly, it is possible to execute various types of illumination control and provide a viewing experience with high quality.

The plurality of classified illumination units may be classified on a basis of installation positions.

Accordingly, it is possible to improve the sense of unity through synchronous control of illumination, and provide a viewing experience with high quality.

The plurality of classified illumination units may include a main illumination unit, an upper-side illumination unit, a lower-side illumination unit, and a speaker illumination unit.

Accordingly, it is possible to improve the sense of unity through synchronous control of illumination, and provide a viewing experience with high quality.

The generation unit may generate the illumination control information on a basis of a state of the different reproduction apparatus.

Accordingly it is possible to provide a viewing experience with high quality.

The generation unit may generate the illumination control information on a basis of volume of the different reproduction apparatus.

Accordingly, it is possible to provide a viewing experience with high quality.

The generation unit may generate the illumination control information on a basis of an installation environment of the different reproduction apparatus.

Accordingly, it is possible to provide a viewing experience with high quality.

A reproduction method according to an embodiment of the present technology is a reproduction method by a reproduction apparatus including an illumination unit, including; acquiring audio information.

Illumination control information associated with the acquired audio information is generated.

Synchronization control information that includes the audio information and the illumination control information is transmitted to a different reproduction apparatus.

Synchronous reproduction of the audio content with the different reproduction apparatus and synchronous control of the illumination unit are executed on a basis of the synchronization control information.

A program according to an embodiment of the present technology causes a reproduction apparatus including an illumination unit to execute the steps of:
acquiring audio information;
generating illumination control information associated with the acquired audio information;
transmitting, to a different reproduction apparatus, synchronization control information that includes the audio information and the illumination control information; and
executing synchronous reproduction of the audio content with the different reproduction apparatus and synchronous control of the illumination unit, on a basis of the synchronization control information.

A reproduction system according to an embodiment of the present technology is a reproduction system including: a reproduction apparatus; and a different reproduction apparatus, in which the reproduction apparatus includes the illumination unit, the acquisition unit, the generation unit, the transmission unit, and the synchronization control unit.

The different reproduction apparatus includes a reception unit and a synchronization control unit.

The reception unit receives the synchronization control information transmitted from the reproduction apparatus.

The synchronization control unit executes synchronous reproduction of the audio content with the reproduction apparatus and synchronous control of the illumination unit, on a basis of the received synchronization control information.

A reproduction method according to another embodiment of the present technology is executed by a reproduction apparatus; and a different reproduction apparatus.

The reproduction apparatus acquires audio information, generates illumination control information associated with the acquired audio information, transmits, to a different reproduction apparatus, synchronization control information that includes the audio information and the illumination control information, and executes synchronous reproduction of the audio content with the different reproduction apparatus and synchronous control of the illumination unit, on a basis of the synchronization control information.

The different reproduction apparatus receives the synchronization control information transmitted from the reproduction apparatus, and executes synchronous reproduction of the audio content with the reproduction apparatus and synchronous control of the illumination unit, on a basis of the received synchronization control information.

### Advantageous Effects of Invention

As described above, in accordance with the present technology, it is possible to provide a viewing experience with high quality to a user. It should be noted that the effect described here is not necessarily limitative and may be any effect described in the present disclosure.

### Brief Description of Drawings

[Fig. 1] Fig. 1 is a schematic diagram showing a configuration example of a content reproduction system according to an embodiment.
[Fig. 2] Fig. 2 is an external view showing a configuration example of a reproduction apparatus.
[Fig. 3] Fig. 3 is an external view showing a configuration example of the reproduction apparatus.
[Fig. 4] Fig. 4 is an external view showing a configuration example of the reproduction apparatus.
[Fig. 5] Fig. 5 is an external view showing a configuration example of the reproduction apparatus.
[Fig. 6] Fig. 6 is a block diagram showing a functional configuration example of the reproduction apparatus.
[Fig. 7] Fig. 7 is a schematic diagram showing an example of analysis of audio data by an audio analysis unit.
[Fig. 8] Fig. 8 is a schematic diagram for describing setting of a reproduction state.
[Fig. 9] Fig. 9 is a diagram schematically showing a plurality of illumination patterns in association with each reproduction state.
[Fig. 10] Fig. 10 is a sequence diagram showing a processing example at the time when multi-room reproduction accompanied by synchronous control of an illumination unit is executed.
[Fig. 11] Fig. 11 is a sequence diagram showing a processing example at the time when the multi-room reproduction accompanied by synchronous control of the illumination unit is executed.
[Fig. 12] Fig. 12 is a schematic diagram showing an example of synchronization control information.
[Fig. 13] Fig. 13 is a schematic diagram for describing an operation of executing the multi-room reproduction by a master apparatus and a slave apparatus.
[Fig. 14] Fig. 14 is a schematic diagram for describing an example of a basic illumination pattern.
[Fig. 15] Fig. 15 is a schematic diagram for describing an example of the basic illumination pattern.
[Fig. 16] Fig. 16 is a schematic diagram showing an example of a light emission pattern in an ON-state.
[Fig. 17] Fig. 17 is a schematic diagram showing an example of the light emission pattern in the ON-state.
[Fig. 18] Fig. 18 is a schematic diagram showing an example of the light emission pattern in the ON-state.

### Mode(s) for Carrying Out the Invention

Hereinafter, an embodiment of the present technology will be described with reference to the drawings.

### [Content Reproduction System]

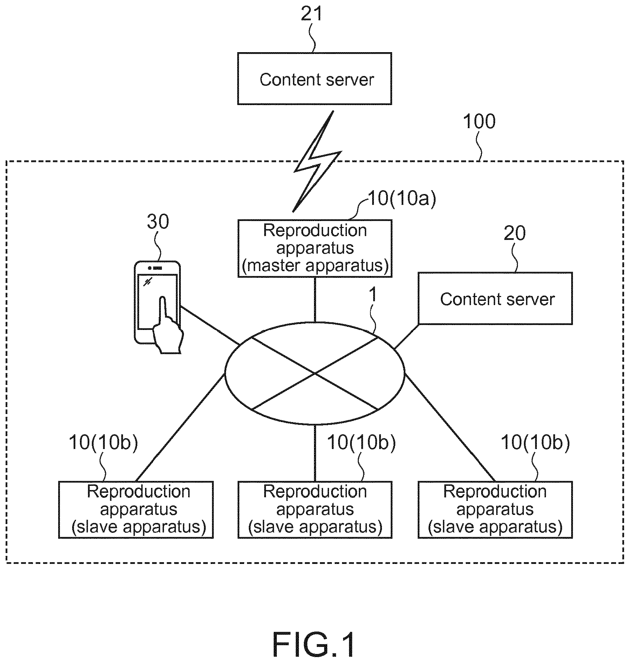

Fig. 1 is a schematic diagram showing a configuration example of a content reproduction system according to an embodiment of the present technology. A content reproduction system 100 includes a home network 1 established in a house, a plurality of reproduction apparatuses 10 connected thereto, a content server 20 that provides content, and a portable terminal 30.

The plurality of reproduction apparatuses 10, the content server 20, and the portable terminal 30 are connected to the home network 1 through wireless LAN communication such as WiFi via an access point (not shown). As the home network 1, for example, a network conforming to the DLNA (registered trademark) (Digital Living Network Alliance) standard is used.

In this case, the plurality of reproduction apparatuses 10 each function as a DMR (Digital Media Renderer), and the content server 20 functions as a DMS (Digital Media Server). Further, the portable terminal 30 functions as a DMC (Digital Media Controller). Note that the present technology is applicable also to the case where a network using another protocol is established.

The plurality of reproduction apparatuses 10 are arranged in each room such as a living room, a bed room, and a kitchen. The portable terminal 30 transmits an instruction to acquire and reproduce content from the content server 20 to each reproduction apparatus 10 by using, for example, a control message of UPnP (Universal Plug and Play). Therefore, a user is capable of controlling the operation of reproducing the reproduction apparatuses 10 arranged in each room by operating the portable terminal 30.

Further, assumption is made that the home network 1 and a global network are connected to each other via a home gateway (not shown). In this case, by operating the portable terminal 30, it is also possible to cause each reproduction apparatus 10 to reproduce content in content server 21 present in the global network (cloud). Further, it is also possible to cause the reproduction apparatus 10 to reproduce content, by using short-range wireless communication such as Bluetooth (registered trademark).

### [Multi-Room Reproduction]

In this embodiment, by operating the portable terminal 30, it is possible to execute multi-room reproduction of audio content. The multi-room reproduction is a reproduction method in which the plurality of reproduction apparatuses 10 connected to the home network 1 form a group and the group executes synchronous reproduction of the same content.

For example, it is possible to enjoy music with loud volume in the entire room by causing the plurality of reproduction apparatuses 10 in the same room to reproduce the same content. Alternatively, in the case of inviting a lot of friends to hold a party, for example, it is possible to liven up the party by causing the reproduction apparatuses 10 arranged in each room to reproduce the same content and simultaneously controlling the operation thereof.

As shown in Fig. 1, in this embodiment, one of the plurality of reproduction apparatuses 10 forming a group is set as a master apparatus 10a, and a different reproduction apparatus 10 is set as a slave apparatus 10b. In the case where the multi-room reproduction is executed, an instruction therefor is transmitted to the master apparatus 10a. The master apparatus 10a downloads content from the content server 20, and simultaneously distributes the content to the slave apparatus 10b by streaming. Accordingly, the multi-room reproduction of content is realized. Note that the master apparatus 10a and the slave apparatus 10b are respectively referred to also as a parent device and a child device in some cases. Further, the slave apparatus 10b is referred to as a player device in some cases.

By the multi-room reproduction, it is possible to execute not only synchronous reproduction of content but also control of reproduction volume, switching of content, and the like in synchronization. Meanwhile, it is also possible to individually execute control of reproduction volume and control of fade-in/fade-out or the like on each reproduction apparatus while synchronizing the reproduction positions.

The method for realizing synchronous reproduction by the master apparatus 10a and the slave apparatus 10b is not limited, and an arbitrary technology relating to synchronous reproduction or the like may be used, for example. For example, synchronous reproduction can be executed by achieving synchronization by clock and a time stamp and combining buffer processing therewith. Examples thereof include flow control or the like that combines an RTP (Real-time Transport Protocol) and an RTCP (RTP Control Protocol).

Note that in this embodiment, synchronous control of illumination units of the reproduction apparatuses 10 is executed in accordance with the multi-room reproduction of audio content. This point will be described in detail later.

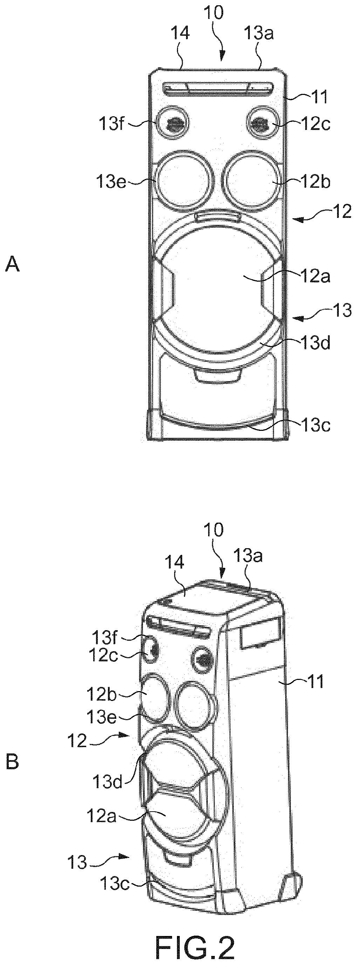

Fig. 2 to Fig. 5 are each an external view of showing a configuration example of the reproduction apparatus 10. The reproduction apparatus 10 includes a main body 11, a speaker unit 12 provided in the main body 11, an illumination unit 13, and an operation panel 14.

The speaker unit 12 is typically configured in a multi-way system. For example, it is configured in a two-way system, i.e., it includes a high-range speaker (tweeter) and a low-range speaker (woofer). Alternatively, for example, it is configured in a three-way system, i.e., it includes a high-range speaker (tweeter), a mid-range speaker (squawker), and a low-range speaker (woofer). It goes without saying that the present technology is not limited thereto, and the present technology is applicable also to a full-range speaker.

The illumination unit 13 includes a solid light source such as an LED and an LD, a lamp light source, or the like, and is capable of emitting light of various colors. In this embodiment, it is classified into a plurality of illumination groups on the basis of the position installed in the main body 11. That is, it is classified into a main illumination unit 13a, a top illumination unit 13b, a bottom illumination unit 13c, and a woofer illumination unit 13d.

In each reproduction apparatus 10, the main illumination unit 13a is disposed on the front surface or the like of the main body 11, and is an illumination unit that exhibits the most visually expressive illumination effect. The top illumination unit 13b is disposed on the upper side of the reproduction apparatus 10, and emits illumination light to the ceiling, the back wall, and the like. The bottom illumination unit 13c is disposed on the lower side of the reproduction apparatus 10, and emits illumination light mainly to the feet. The woofer illumination unit 13d is disposed in the vicinity of the woofer, and effectively illuminates the woofer having a large diameter.

An appropriate operation by each illumination unit realizes various types of exciting illumination synchronized with audio content. Note that in each reproduction apparatus 10, the main illumination unit 13a is always set, and other illumination units are set as necessary.

In this embodiment, the illumination unit 13 corresponds to an illumination unit. The plurality of illumination groups correspond to a plurality of classified illumination units configured by classifying the illumination units in accordance with predetermined rules. Further, the top illumination unit 13b, the bottom illumination unit 13c, and the woofer illumination unit 13d respectively correspond to an upper-side illumination unit, a lower-side illumination unit, and a speaker illumination unit. Note that a lateral-side illumination unit, a tweeter illumination unit, and he like may be configured. Note that the predetermined rules are not limited, and the illumination units may be classified in accordance with rules different from the installation positions.

The operation panel 14 is capable of inputting control regarding the speaker unit 12, e.g., control of volume and audio, control regarding the illumination unit 13, e.g., control of a light emission color and a light emission mode, or the like.

The reproduction apparatus 10 illustrated in Parts A and B of Fig. 2 includes the main body 11 having an elongated quadrangular prismatic shape. The height of the main body 11 is, for example, approximately 50 cm to approximately 1 m 50 cm. One woofer 12a is provided substantially at the center of the front of the main body 11. Two squawkers 12b and two tweeters 12c are provided above the woofer 12a.

On the upper surface of the main body 11, the operation panel 14 and the main illumination unit 13a are provided. The woofer illumination unit 13d is provided in the vicinity of the woofer 12a, and the bottom illumination unit 13c is provided at the lower end of the front of the main body 11. The top illumination unit 13b is not provided in this reproduction apparatus 10. Note that a squawker illumination unit 13e and a tweeter illumination unit 13f are respectively provided in the vicinity of the squawker 12b and the tweeter 12c. The squawker illumination unit 13e and the tweeter illumination unit 13f are controlled in synchronization with the woofer illumination unit 13d, for example.

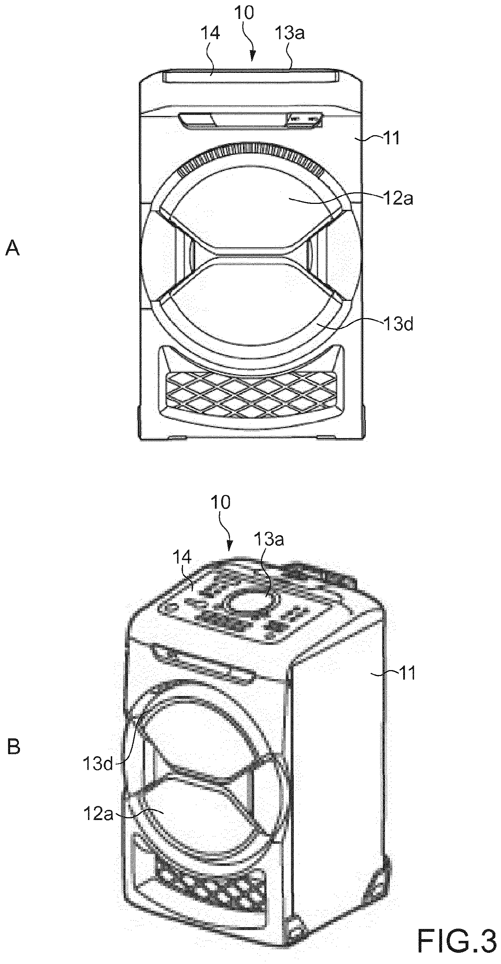

The reproduction apparatus 10 illustrated in Parts A and B of Fig. 3 includes the main body 11 having a quadrangular prismatic shape with a height of approximately 1 m. At the front of the main body 11, one woofer 12a is provided and a squawker and a tweeter are not provided. The operation panel 14 and the main illumination unit 13a are provided on the upper surface of the main body 11, and the woofer illumination unit 13d is provided to the woofer 12a. The top illumination unit 13b and the bottom illumination unit 13c are not provided.

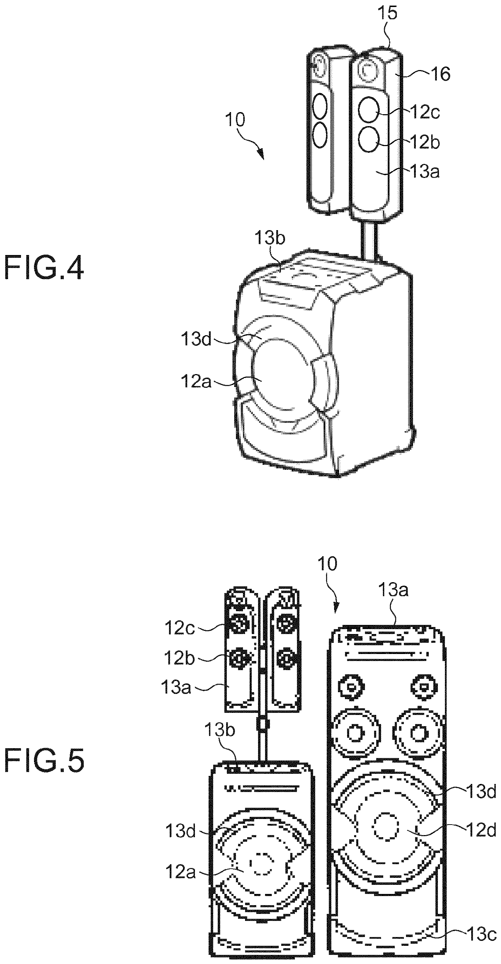

As shown in Fig. 4, the reproduction apparatus 10 shown in Fig. 3 may be combined with a speaker apparatus 15 having the squawker 12b and the tweeter 12c thereon to configure the reproduction apparatus 10 of a three-way system. In this case, for example, the main illumination unit 13a may be configured on two main bodies 16 of the speaker apparatus 15. Then, the main illumination unit 13a shown in Fig. 3 may be set as the top illumination unit 13b.

Further, as shown in Fig. 5, the reproduction apparatus 10 shown in Fig. 2 and the reproduction apparatus 10 shown in Fig. 4 may be combined with each other to configure the reproduction apparatus 10. For example, the main illumination unit 13a, the top illumination unit 13b, the bottom illumination unit 13c, and the woofer illumination unit 13d may be set as shown in Fig. 5.

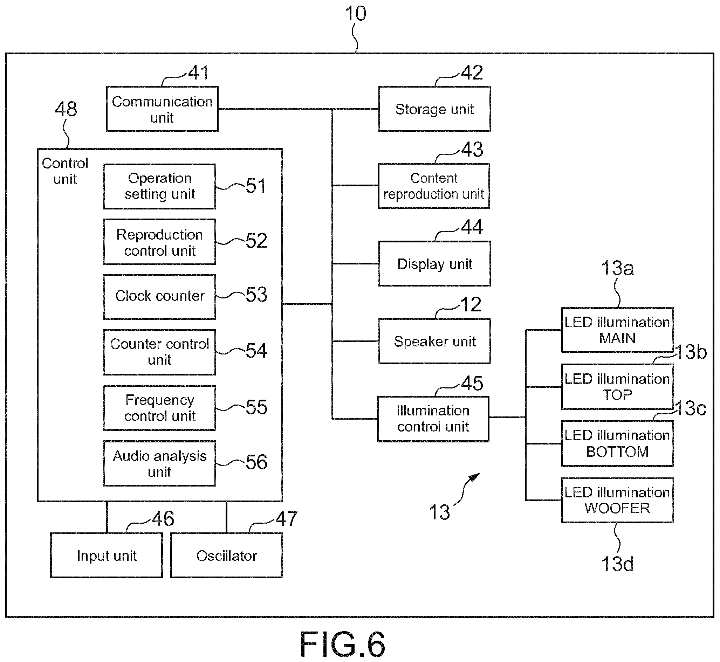

Fig. 6 is a block diagram showing a functional configuration example of the reproduction apparatus 10. The reproduction apparatus 10 includes a communication unit 41, a storage unit 42, a content reproduction unit 43, a display unit 44, an illumination control unit 45, an input unit 46, an oscillator 47, and a control unit 48.

The communication unit 41 is a communication interface including a communication device for executing data communication with an external apparatus, or the like. The communication unit 41 transmits/receives various types of data to/from the content server 20 or the different reproduction apparatus 10 via a network, under the control of the control unit 48. As the communication unit 41, for example, a wireless LAN module such as WiFi or a communication module for short-range wireless communication such as Bluetooth (registered trademark) is mounted. The control unit 48 and the communication unit 41 constitute a transmission unit and a reception unit.

The communication unit 41 functions as an acquisition unit that acquires content data (audio data (audio information)) of audio content. Note that a storage medium such as a CD and a USB may be set in the reproduction apparatus 10 and audio data may be read from the storage medium. In this case, the drive, interface, and the like that read audio data function as an acquisition unit.

The storage unit 42 is a non-volatile storage device, and includes, for example, an HDD (Hard Disk Drive), a flash memory, or another solid memory. In the storage unit 42, for example, various types of data such as the content data acquired from the content server 20 or the like, and information (e.g., MAC address and UUID) for identifying the reproduction apparatus 10 are stored. Further, the storage unit 42 stores various programs such as an application for executing the reproduction method according to this embodiment.

The content reproduction unit 43 reproduces the content stored in the storage unit 42. The content reproduction unit 43 drives the display unit 44 and the speaker unit 12 to reproduce video content and audio content.

The display unit 44 is a display device using, for example, liquid crystal, EL (Electro-Luminescence), or the like, and displays video content, various GUIs, and the like. In the case where a touch panel is configured as the operation panel 14, the operation panel 14 and the display unit 44 are integrally formed.

The illumination control unit 45 drives the main illumination unit 13a, the top illumination unit 13b, the bottom illumination unit 13c, and the woofer illumination unit 13d. The illumination control unit 45 can also be regarded as a part of the illumination unit 13.

The input unit 46 inputs, to the control unit 48, an operation signal corresponding to the operation input to the operation panel 14, an operation signal corresponding to the operation via a remote controller, and the like.

The oscillator 47 oscillates at a predetermined sampling frequency and generates and output a clock. The clock from the oscillator 47 is transmitted to the control unit 48, and used as the basis of various operations.

The control unit 48 controls the operation of each block of the reproduction apparatus 10, and executes communication with the content server 20 and the different reproduction apparatus 10. The control unit 48 has a hardware configuration necessary for a computer, such as a CPU (Central Processing Unit), a memory (RAM (Random Access Memory), ROM (Read Only Memory)). The CPU loads a program (application) according to the present technology stored in the storage unit 42 into the RAM and executes the program, thereby realizing a reproduction method according to the present technology.

As the control unit 48, for example, a PLD (Programmable Logic Device) such as an FPGA (Field Programmable Gate Array) or a device such as an ASIC (Application Specific Integrated Circuit) may be used.

In this embodiment, The CPU of the control unit 48 executes a predetermined program, thereby realizing functional blocks of an operation setting unit 51, a reproduction control unit 52, a clock counter 53, a counter control unit 54, a frequency control unit 55, and an audio analysis unit 56. Note that in order to realize each functional block, dedicated hardware such as an IC (integrated circuit) may be appropriately used.

The operation setting unit 51 sets, in the case of executing the multi-room reproduction, whether to cause the reproduction apparatus 10 to operate as the master apparatus 10a or the slave apparatus 10b. The operation setting unit 51 typically executes the operation setting in response to an instruction from the portable terminal 30.

The reproduction control unit 52 controls the operation of reproducing content by the content reproduction unit 43, i.e., the driving operation of the display unit 44 or the speaker unit 12. Various reproduction control signals including fast forward, skip, and the like are output to the content reproduction unit 43 by the reproduction control unit 52, on the basis of the operation signal or the like input from the input unit 46. The content reproduction unit 43 executes reproduction of content on the basis of the reproduction control signal output from the reproduction control unit 52.

Further, the reproduction control unit 52 controls the driving operation of each illumination unit by the illumination control unit 45. For example, an illumination control signal that controls the illumination pattern and light emission color of LED illumination is output to the illumination control unit 45. The illumination control unit 45 drives the main illumination unit 13a, the top illumination unit 13b, the bottom illumination unit 13c, and the woofer illumination unit 13d, on the basis of the illumination control signal output from the reproduction control unit 52. Note that in the case where there is an illumination unit (the top illumination unit 13b, the bottom illumination unit 13c, the woofer illumination unit 13d) that is not set in the reproduction apparatus 10, the illumination control signal for the illumination unit is invalidated.

In this embodiment, multi-room reproduction that is synchronous reproduction of audio content with the different reproduction apparatus 10, and synchronous control of the illumination unit 13 with the different reproduction apparatus 10 are executed by the reproduction control unit 52. In this embodiment, the reproduction control unit 52 functions as a synchronization control unit.

The clock counter 53 increases the value in accordance with the clock from the oscillator 47. In this embodiment, by using the value of the clock counter 53, the multi-room reproduction and synchronous control of the illumination unit 13 are executed.

The counter control unit 54 is a block for achieving synchronization between the master apparatus 10a and the slave apparatus 10b. In the case where the reproduction apparatus 10 is the master apparatus 10a, in response to an inquiry about the counter value transmitted from the slave apparatus 10b, a counter value at the timing of receiving the inquiry is responded by the counter control unit 54.

In the case where the reproduction apparatus 10 is the slave apparatus 10b, the counter control unit 54 inquires of the master apparatus 10a the counter value. For example, a packet for inquiring the counter value is generated, and transmitted via the communication unit 41. Further, on the basis of the response of the counter value from the master apparatus 10a, the clock counter 53 is corrected by the counter control unit 54. Accordingly, a virtual clock is set in the group, and multi-room reproduction and synchronous control of the illumination unit 13 are realized with high precision.

The frequency control unit 55 controls the sampling frequency in accordance with the sampling rate of content. The frequency control unit 55 synchronizes the sampling frequencies of the reproduction apparatuses 10 in the group. Accordingly, the precision of multi-room reproduction and synchronous control of the illumination unit 13 is improved.

The audio analysis unit 56 analyzes audio data, and generates illumination control information associated with the audio data. With this illumination control information, the illumination operation of the illumination unit 13 synchronized with the reproduction of the audio content is realized with high precision. For example, various types of illumination with the illumination pattern and illumination color synchronized with rhythm, speed (bpm), tune of the music to be reproduced, changes thereof, and the like are executed. In this embodiment, the audio analysis unit 56 corresponds to a generation unit.

As the reproduction apparatus 10, an arbitrary audio reproduction apparatus (sound reproduction apparatus) including a speaker and an illumination unit may be used. For example, a television apparatus, a PC (Personal computer), an audio video receiver, a video monitor, or a home game machine, or the like may be used. Further, the present technology is applicable to in-vehicle audio or the like mounted on a car.

As the content server 20, for example, a PC, a network compatible HDD (NAS), or the like is used. As the portable terminal 30, a smartphone is typically used. However, the present technology is not limited thereto, and various PDAs (Personal Digital Assistants) such as a tablet terminal may be used.

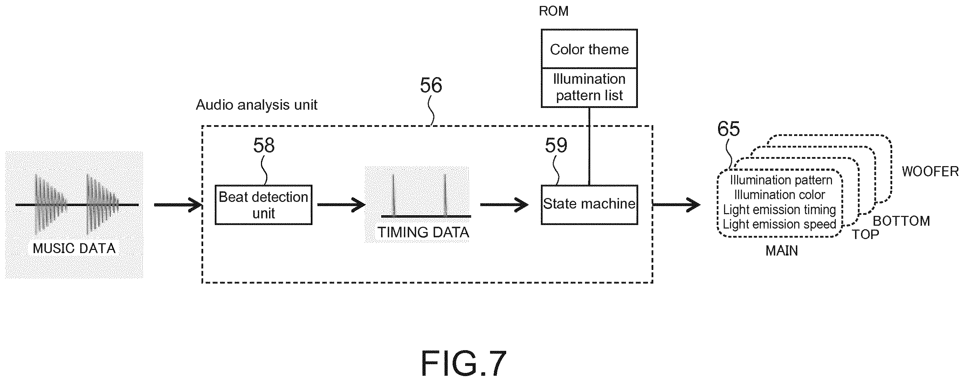

Fig. 7 is a schematic diagram showing an example of analysis of audio data by the audio analysis unit 56. The audio analysis unit 56 includes a beat detection unit 58 and a state machine 59. Audio data (described as MUSIC DATA in Fig. 7) that is acquired from the communication unit 41 or the like and stored in the storage unit 42 is input to the audio analysis unit 56.

The beat detection unit 58 executes beat detection, and timing data is generated. For example, a Fourier transform or the like is executed on audio data, and bass is extracted. Timing data is generated on the basis of the extracted bass component. However, the present technology is not limited thereto, and beat detection may be executed by an arbitrary algorithm. For example, a medium bass or high pitched beat may be used.

On the basis of the timing data, the state machine 59 classifies the audio content into a plurality of reproduction states. The reproduction states are stored as, for example, parameters associated with the pattern, speed (bmp), intensity, or the like of the beat in the ROM or the like of the control unit 48 in advance. The method of associating the result of beat detection and the reproduction state with each other is not limited, and the reproduction state corresponding to so-called tune (content of the content) is typically set. For example, the reproduction states are classified in accordance with quiet tune, intense tune, or the like.

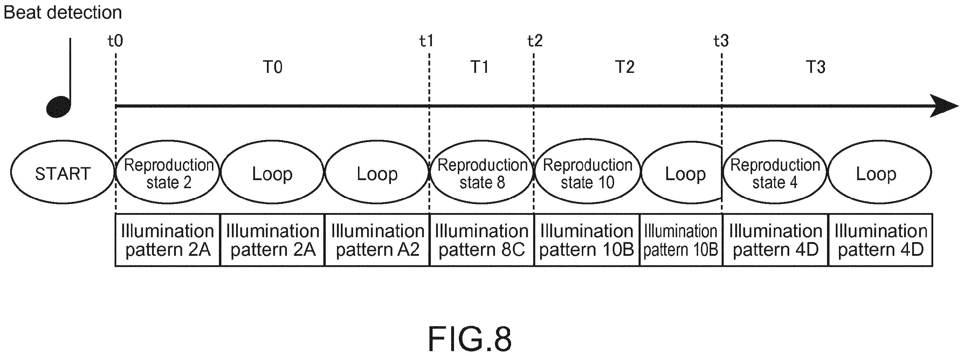

Fig. 8 is a schematic diagram for describing setting of the reproduction state. For example, a reproduction state 2 is set on the basis of the beat detection result from a start time (t0) of content. Assumption is made that a predetermined duration is defined in each reproduction state and the beat pattern and the like are not changed even after the duration is elapsed. In this case, the reproduction state 2 is looped (loop×2).

The beat pattern and the like are changed from a time (t1) at which the second loop is finished, and a reproduction state 8 is set on the basis of the detection result. The beat pattern and the like are further changed from a time (t2) at which the reproduction state 8 is finished, and a reproduction state 10 is set. Even after the duration of the reproduction state 10 is elapsed, the beat pattern and the like are not changed and the reproduction state 10 is looped.

The beat pattern and the like are changed from a time (t3) before the first loop is finished, and a reproduction state 4 is set. The reproduction state is switched in the middle of the duration as described above in some cases. In the example shown in Fig. 8, the reproduction state is the reproduction state 2 in a period T0 and the reproduction state 8 in a period T1. Further, it is the reproduction state 10 in a period T2 and the reproduction state 4 in a period T3. In this way, the audio content is classified into a plurality of reproduction states.

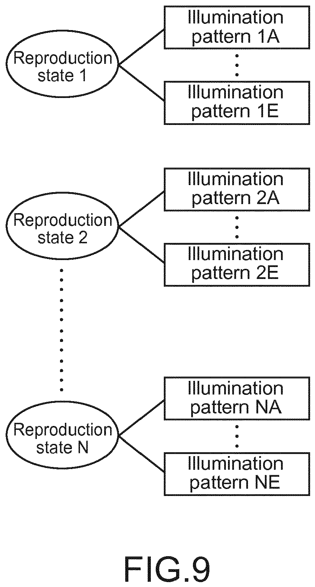

Next, the state machine 59 sets the illumination pattern corresponding to the reproduction state. As schematically shown in Fig. 9, in this embodiment, a plurality of illumination patterns are stored in association with corresponding reproduction states. The illumination pattern is information regarding the pattern for causing the LED or the like of each illumination unit such as the main illumination unit 13a to light. As described above, since the reproduction state is set corresponding to the tune or the like, also the illumination patterns is appropriately defined in accordance with the tune or the like. For example, the reproduction state set for intense tune is associated with a flashy illumination pattern. The reproduction state set for quiet tune is associated with a calm illumination pattern. It goes without saying that the present technology is not limited thereto.

In the example shown in Fig. 9, although illumination patterns A to E are set for reproduction states 1 to N, the number of illumination patterns associated with one reproduction state is not limited. Further, the present technology is not limited to the case where the same number of illumination patterns are associated with each reproduction state.

In the example shown in Fig. 8, an illumination pattern 2A is set in the reproduction state 2 in the period T0, and an illumination pattern 8c is set in the illumination pattern 8 in the period T1. Further, an illumination pattern 10B is set in the reproduction state 10 in the period T2, and an illumination pattern 4D is set in the reproduction state 4 in the period T3.

The method of selecting the illumination pattern to be actually executed from one or more illumination patterns associated with reproduction states is not limited. For example, an illumination pattern is randomly selected using random numbers. Accordingly, it is possible to prevent, in the case where the same reproduction state is repeatedly set to a place where the same phrase in the music is repeated, the illumination pattern from becoming boring due to the same illumination pattern being selected each time. Further, also in the case where the same music is repeated, it is possible to prevent the illumination effect from being monotonous due to the same illumination pattern being repeated.

Each of the one or more illumination patterns may be weighted with a selection probability. Accordingly, it is possible to occasionally execute an illumination pattern having a low selection probability among repetition of illumination patterns to be selected relatively many times, which can be adopted as an effect to excite the user. The method of setting the weighting is not limited, and is set corresponding to the degree of association between the tune and the illumination pattern, for example.

As shown in Fig. 8, since the illumination pattern is switched each time the reproduction state is changed, very effective illumination synchronized with the reproduction of audio content is realized. Note that for the loop of the same reproduction state, another illumination pattern associated with the same reproduction state may be selected. For example, in the case where there is a sense of unity in a plurality of illumination patterns associated with the same reproduction state, it is possible to experience both dynamic illumination corresponding to the change of the reproduction state and various types of illumination having a sense of unity in the same tune.

As shown in Fig. 7, the illumination color is set in accordance with the illumination pattern. The illumination color is set on the basis of the color theme stored in the ROM or the like of the control unit 48. The color theme is typically selected by the user via the portable terminal 30, the operation panel 14 of the reproduction apparatus 10, or the like. For example, the color theme of the user's preference (bluish theme color suggestive of sea, reddish theme color suggestive of passion, etc.) is selected. The state machine 59 determines the light emission color (illumination color) of the LED or the like on the basis of the selected color theme. Accordingly, it is possible to provide a user's favorite viewing experience.

In this embodiment, the illumination pattern, the illumination color, the light emission timing, and the light emission speed are generated as illumination control information 65. The light emission timing is start timing of the illumination pattern, and represents a time (t0 or t1 in Fig. 8, etc.) at which the reproduction state is changed. The light emission speed will be described with a specific example of the illumination pattern to be described later.

Further, as shown in Fig. 7, the illumination control information 65 is generated for each of the main illumination unit 13a, the top illumination unit 13b, the bottom illumination unit 13c, and the woofer illumination unit 13d. That is, the illumination control information 65 is generated in association with information (classification designation information) for designating each illumination unit.

For example, for each reproduction state, one or more illumination patterns for the main illumination unit 13a, one or more illumination patterns for the top illumination unit 13b, one or more illumination patterns for the bottom illumination unit 13c, and one or more illumination patterns for the woofer illumination unit 13d are stored. For each illumination unit, the illumination pattern for actually executing illumination is selected from the stored illumination patterns.

### [Multi-Room Reproduction and Synchronous Control of Illumination Unit]

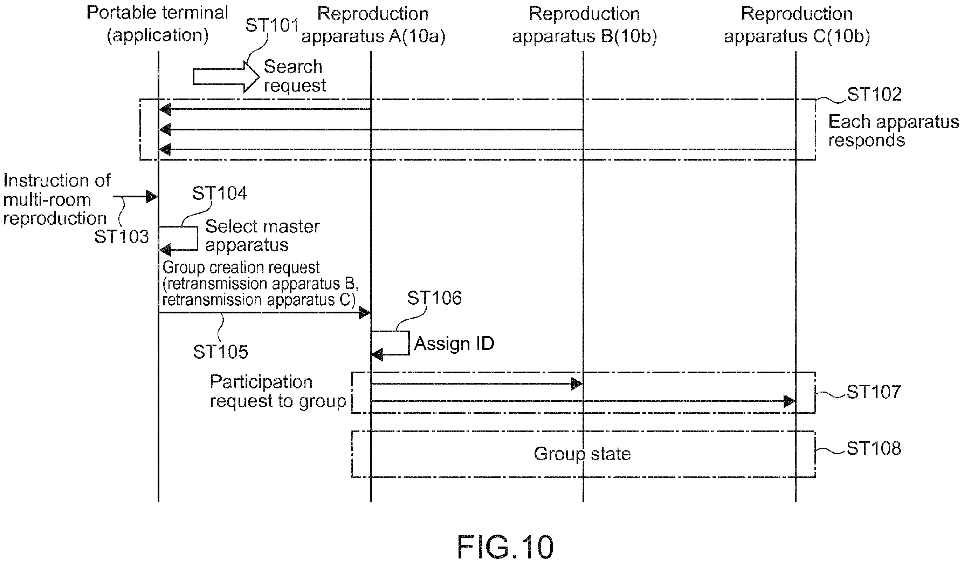

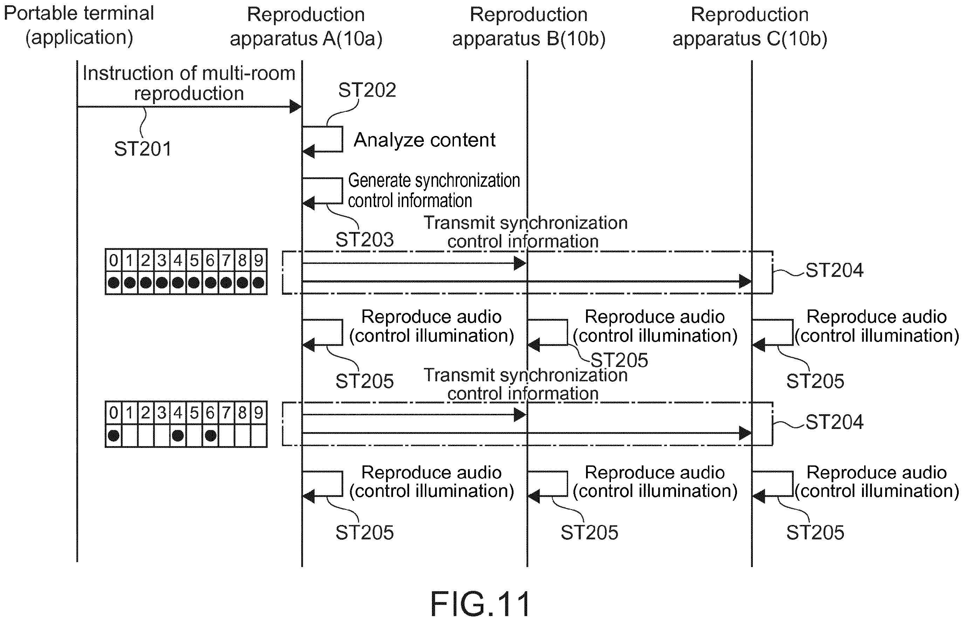

Fig. 10 and Fig. 11 are each a sequence diagram showing a processing example at the time when multi-room reproduction accompanied by synchronous control of the illumination unit 13 is executed. Although three reproduction apparatuses A to C are illustrated as reproduction apparatuses connected to the home network 1 in Fig. 10, the number of reproduction apparatuses is not limited.

When the application according to the present technology is activated, the portable terminal 30 generates a search request for discovering the reproduction apparatus 10, and broadcast it on the home network 1 (Step 101). The reproduction apparatuses A to C each transmit, to the portable terminal 30, a response to the search request (Step 102).

The reproduction apparatuses A to C that has responded to the search request are displayed on a touch panel (display unit) of the portable terminal 30. The user selects reproduction apparatuses forming a group, and inputs an instruction of multi-room reproduction (Step 103). In this embodiment, the reproduction apparatuses A to C are selected.

The master apparatus 10a is selected from the reproduction apparatuses selected by the user (Step 104). For example, a reproduction apparatus having a high network strength, a reproduction apparatus connected to a global network, or the like is set as the master apparatus 10a. Further, a reproduction apparatus superior in reproducing content desired by the user is selected as the master apparatus 10a. The method of selecting the master apparatus 10a is not limited, and the user may designate the master apparatus 10a.

In the example shown in Fig. 10, the reproduction apparatus A is selected as the master apparatus 10a. The portable terminal 30 transmits a group creation request to the reproduction apparatus A (Step 105). The request includes identification information of the reproduction apparatuses B and C to be the slave apparatuses 10b. Hereinafter, in some cases, the reproduction apparatus A will be referred to as the master apparatus A, and the reproduction apparatuses B and C will be referred to as the slave apparatuses B and C.

The master apparatus A assigns an ID for synchronous control of the illumination unit 13 to each of the reproduction apparatuses A to C forming a group (Step 106). For example, the master apparatus A assigns ID=0 to itself to be the master apparatus 10a, and respectively assigns ID=1 and 2 to the slave apparatuses B and C. The information assigned as ID, the method of assigning ID, and the like are not limited as long as each of the reproduction apparatuses in the group can be identified.

The master apparatus A transmits, to the slave apparatuses B and C, a request for participating in a group (Step 107). At this time, the ID assigned to each of the slave apparatuses B and C is transmitted. Accordingly, a group is formed, and the reproduction apparatuses A to C are in a group state (Step 108). Further, the slave apparatuses B and C acquire their own IDs.

Note that the slave apparatuses B and C that have received the group participation request may request the master apparatus A to notify an ID, and then the master apparatus A may notify the slave apparatuses B and C of IDs. Further, after a group is formed, an ID may be assigned to a slave apparatus whose participation in the group has been confirmed.

It is also possible to execute multi-room reproduction by an already formed group. For example, the portable terminal 30 inquires of the reproduction apparatuses A to C that have responded the search request the group state. The group state is information indicating whether or not a group is formed and whether it is the master apparatus 10a or the slave apparatus 10b in the case where a group is formed. By acquiring the group state, it is possible to grasp the already formed group, and instruct to execute multi-room reproduction.

As shown in 11, the master apparatus A is instructed to execute multi-room reproduction (Step 201). The instruction of multi-room reproduction includes an instruction of audio content selected by the portable terminal 30. The master apparatus A acquires audio data to be reproduced from the content server 20 in the home network 1, for example, and stores it in the storage unit 42.

The master apparatus A analyzes the audio content (Step 202) to generate synchronization control information (Step 203). The synchronization control information is information including the audio information and the illumination control information 65 shown in Fig. 7.

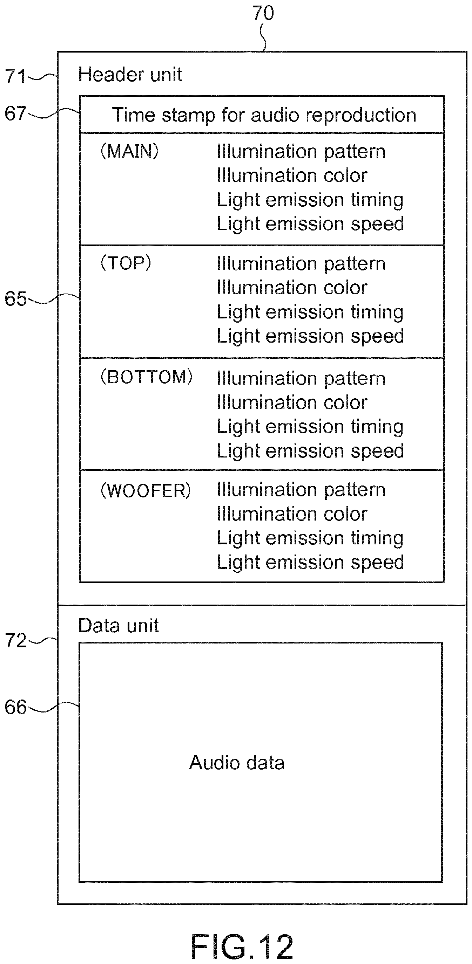

Fig. 12 is a schematic diagram showing an example of the synchronization control information. In this embodiment, as the synchronization control information, a packet 70 of audio data having a header to which the illumination control information 65 is added is generated. That is, a packet in which the illumination control information 65 is stored in a header unit 71 and an audio data 66 is stored in a data unit 72 is generated.

As shown in Fig. 12, a time stamp 67 for audio reproduction is stored in the header unit 71. When the counters (synchronized with each other) of the master apparatus 10a and the slave apparatus 10b match the time stamp of the packet 70, the audio data 66 of the data unit 72 is reproduced.

Further, an ID table 68 shown in Fig. 11 is stored in the header unit 71. The ID table 68 corresponds to apparatus designation information for designating the reproduction apparatus 10 whose illumination is to be controlled. In Fig. 11, the ID table 68 in the case where 10 reproduction apparatuses 10 form a group is illustrated. In an ID table 68a, all the reproduction apparatuses 10 in the group is instructed. In an ID table 68b, three reproduction apparatuses 10 are instructed. As described above, in this embodiment, the illumination control information 65 is generated in association with the apparatus designation information.

Note that the illumination control information 65 is stored in the header unit 71 of the packet 70 corresponding to the light emission timing. That is, it is stored in the header unit 71 of the packet 70 of the audio data to be reproduced at the time (t0, t1, or the like) shown in Fig. 8 at which the reproduction state is changed. That is, the illumination control information 65 is not stored in the packet 70 of the audio data to be reproduced at timing different from the light emission timing. When the audio data is reproduced by the packet 70, the illumination pattern is looped. Note that since an amount of information to be stored in the header unit 71 can be added to the header unit 71, whether or not the illumination control information 65 is stored can be easily determined.

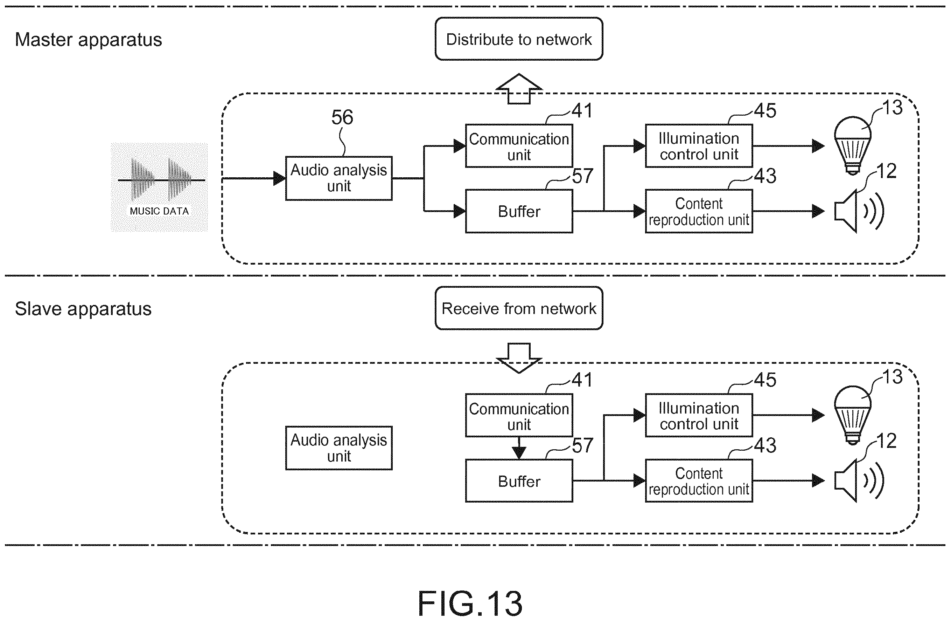

Fig. 13 is a schematic diagram for describing an operation of executing the multi-room reproduction by each of the master apparatus A and the slave apparatuses B and C. The synchronization control information generated by the audio analysis unit 56 of the master apparatus A is stored in a buffer 57 configured in the control unit 48 of the master apparatus A. Further, the synchronization control information is distributed to the slave apparatuses B and C by multicast or unicast via the communication unit 41 (Step 204 in Fig. 11). The pieces of synchronization control information transmitted to the slave apparatuses B and C are stored in the buffers 57 of the slave apparatuses B and C.

The master apparatus A and the slave apparatuses B and C each execute audio reproduction when virtual clocks (clock counters) held by themselves match the time of the time stamp added to the audio data stored in the buffer 57. That is, a reproduction control signal is generated by the reproduction control unit 52 shown in Fig. 6, and output to the content reproduction unit 43. Then, the content reproduction unit 43 drives the speaker unit 12, and the audio content is reproduced (Step 205).

In the case where the ID table 68 and the illumination control information 65 are added to the header unit 71, the reproduction control unit 52 of each of the master apparatus A and the slave apparatuses B and C compares the ID designated by the ID table 68 and the ID of its own. In the case where the IDs match with each other, illumination control corresponding to the illumination pattern and the illumination color is executed in accordance with the light emission timing in the synchronous control signal. That is, the reproduction control unit 52 generates an illumination control signal, and output to the illumination control unit 45. Then, the illumination control unit 45 drives each illumination unit of the illumination unit 13 (the same Step 205).

For example, in the case where all the reproduction apparatuses 10 are designated, the illumination units 13 of all the reproduction apparatuses 10 emit light in synchronization. Further, for example, in the case where the loop of the same reproduction state continues, by sequentially transmitting the illumination control information including the same illumination pattern with a fixed time difference while changing the IDs, it is possible to cause the reproduction apparatuses 10 to sequentially emit light in the same illumination pattern like a troll. By setting the ID for illumination control as described above, it is possible to execute various types of illumination control. Note that it is also possible to always cause all the reproduction apparatuses 10 to execute the same illumination control without assigning the IDs.

Note that in Fig. 11, a case where transmission of the synchronization control information and audio reproduction (illumination control) are executed a plurality of times is illustrated, and the Steps are denoted by the same reference symbols (204 and 205).

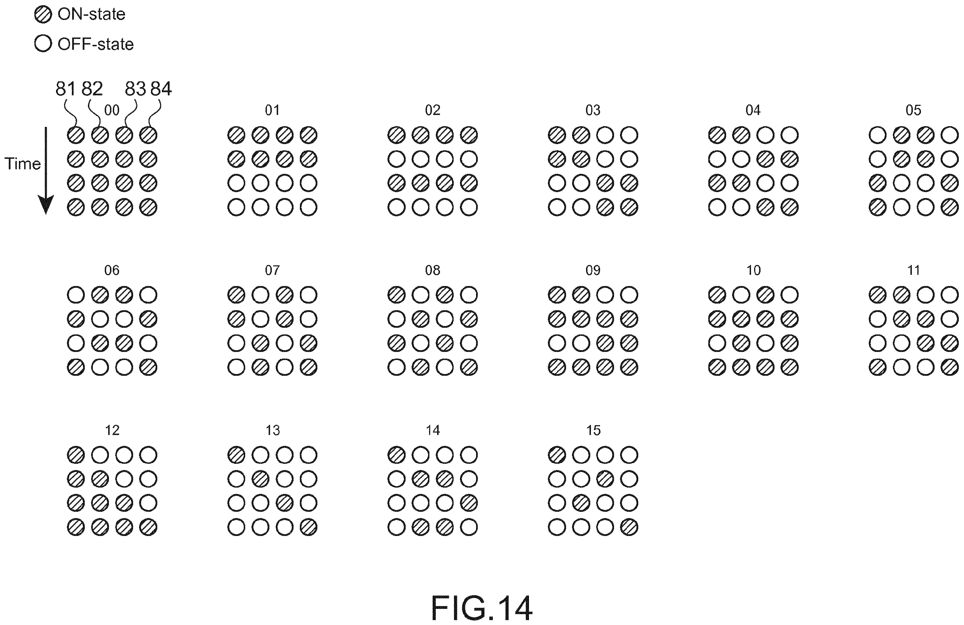

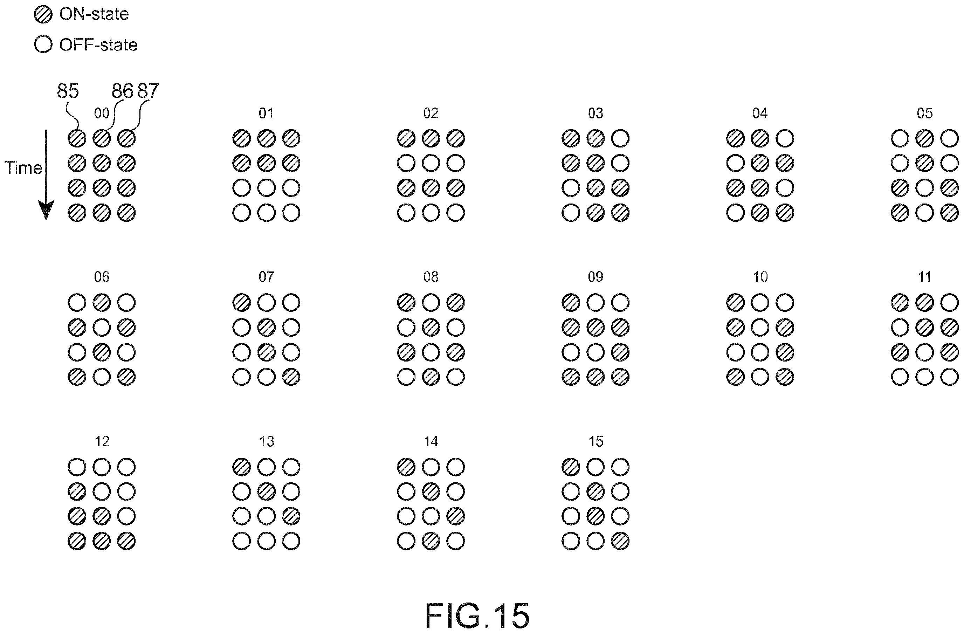

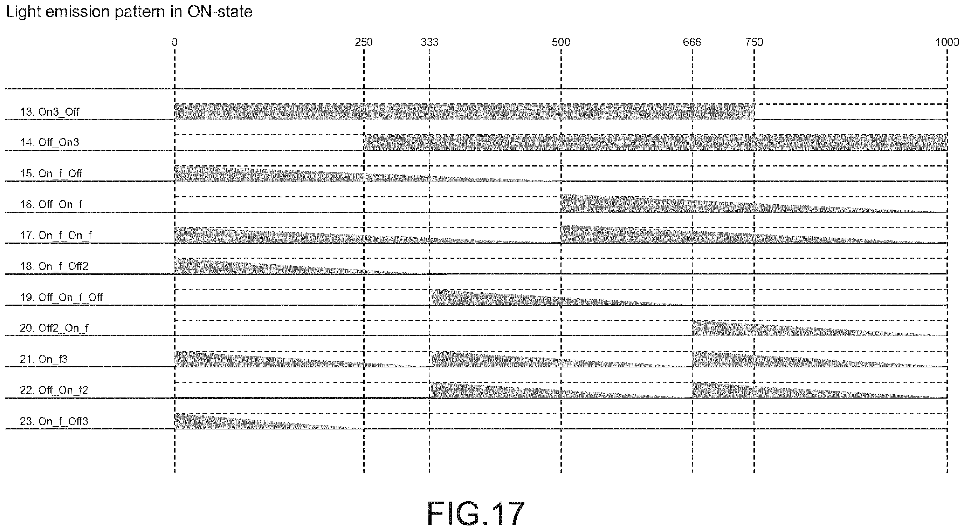

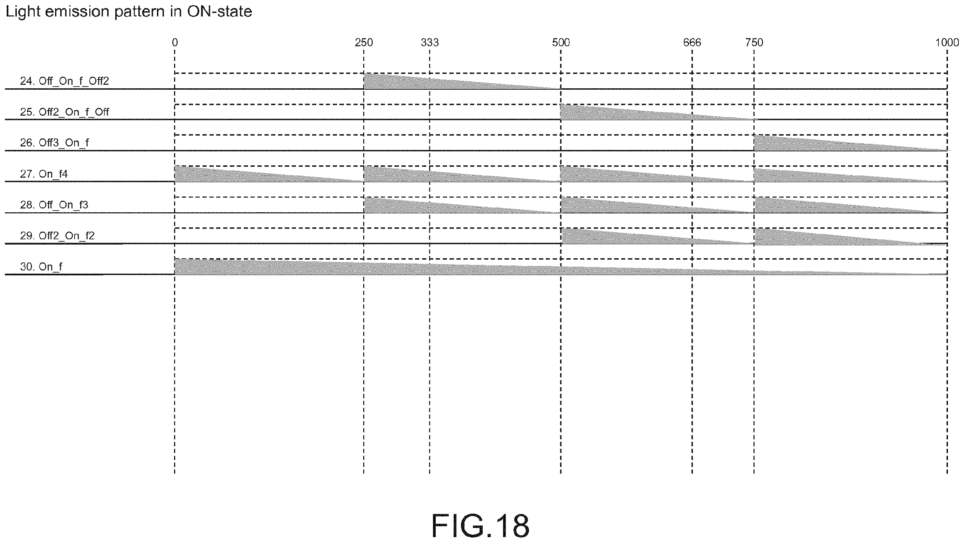

Fig. 14 to Fig. 18 are each a schematic diagram for describing an example of the illumination pattern included in the synchronization control information. Fig. 14 and Fig. 15 are each a schematic diagram for describing an example of a basic illumination pattern.

In Fig. 14, the ON/OFF states of four LEDs 81 to 84 being changed in four stages along the time axis are illustrated. For example, in a pattern 00, all the four LEDs 81 to 84 blink four times while being in the ON-states. In a pattern 13, the left end LED 81 to the right end LED 84 sequentially enter the ON-states.

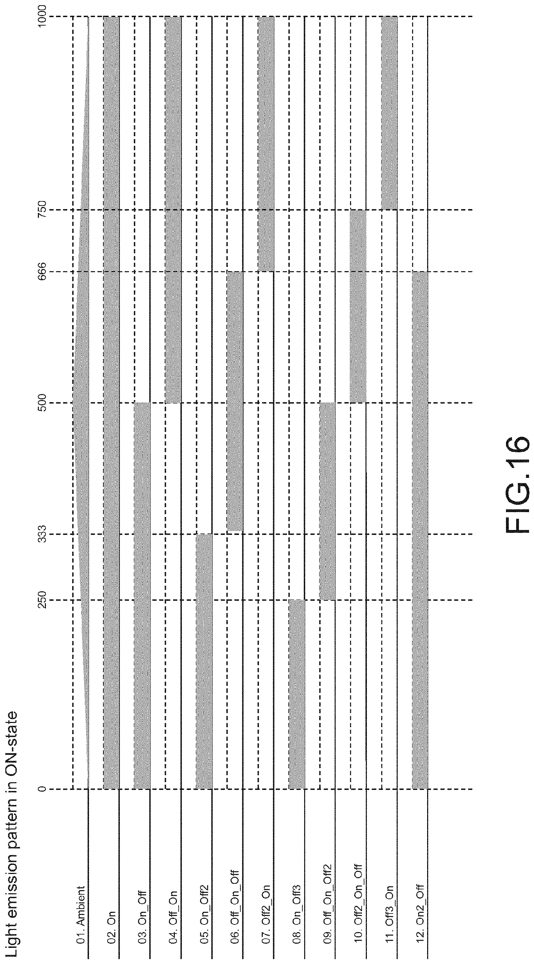

In Fig. 14, 16 basic illumination patterns are illustrated. By reversing the ON/OFF states of each LED, further 16 illumination patterns are realized. Further, by reversing the right and left in the figure, further 16 illumination patterns are realized. Further, by reversing the order of illumination change along the time axis, i.e., the orientation of the time axis in the figure, further 16 illumination patterns are realized. Some of them have the same pattern. However, approximately 60 basic illumination patterns are realized.

Fig. 15 shows an example of the basic illumination pattern realized by three LEDs 85 to 87. Also in the case where three LEDs are used, approximately 60 basic illumination patterns are realized.

Fig. 16 to Fig. 18 are each a schematic diagram showing an example of the light emission pattern in the ON-state. As the ON-state shown in Fig. 14 and Fig. 15, for example, various light emission patterns shown in Fig. 16 to Fig. 18 can be set. Note that no light is emitted in the OFF-state.

In the light emission pattern shown in Fig. 16 to Fig. 18, the turning ON/OFF of the LED and the light emission amount is appropriately controlled with respect to a predetermined light emission time (0 to 1000 in this example). The predetermined light emission time is not limited, and is appropriately set in accordance with, for example, intervals of illumination change in the basic illumination pattern in Fig. 14 and Fig. 15. It goes without saying that the present technology is not limited thereto.

In the ambient of a pattern 01, the light emission amount increases from the start of the light emission time to the intermediate time and decreases from the intermediate time to the end. In patterns 02 to 14, the turning ON/OFF of the LED are appropriately combined. In each pattern, the timing of turning ON/OFF, and the lengths of the ON-time and OFF-time are appropriately set.

In patterns 15 to 30, the light emission amount decrease in accordance with the switching timing from ON to OFF. That is, the LED is faded out in accordance with the switching timing to OFF. It goes without saying that a pattern in which the LED is faded in in accordance with the switching timing and then turned OFF at a stretch, and the like are conceivable.

In this embodiment, the basic illumination patterns illustrated in Fig. 14 and Fig. 15 and the light emission patterns in the ON-state shown in Fig. 16 to Fig. 18 are combined to generate an illumination pattern as the synchronization control information. The same light emission pattern may be set in all the ON-state of one illumination pattern, or different light emission patterns may be set. Further, the light emission pattern may be set for each LED. Accordingly, it is possible to realize various illumination patterns, and various types of illumination are realized.

The basic illumination pattern and the light emission pattern in the ON-state are not limited to those shown in the figures, and may be arbitrarily set. Further, the illumination pattern may be defined by a method different from the combination of the basic illumination pattern and the light emission pattern in the ON-state.

The light emission speed included in the synchronization control information corresponds to the interval of illumination change in the basis light emission pattern shown in Fig. 13 or the like. In the case where the light emission speed is high, the interval of illumination change is short and very flashy illumination is obtained. In the case where the light emission speed is low, the interval of illumination change is long and a quiet atmosphere is created by gentle illumination change.

Note that the light emission time of the light emission pattern in the ON-state is also appropriately set in accordance with the light emission speed. For example, in the case where the light emission speed is high, the light emission time of the light emission pattern is set to be short accordingly. In the case where the light emission speed is low, the light emission time is set to be long accordingly. This makes it possible to exhibit various illumination effects.

The light emission speed is determined on the basis of, for example, the interval, speed (bmp), intensity, and the like of beat. For example, it is set to be high in the case of intense tune and low in the case of quiet tune. Further, for example, it may be set in a plurality of stages such as a reference speed, a reference speed×2, a reference speed×3, and a reference speed×4. The number of stages is not limited, and a specific numerical value (e.g., millisecond) is also not limited.

The light emission color may be arbitrarily set, and examples thereof include the following colors.
Blue (0,0,255)
Sky (0,150,255)
Lime (0,255,0)
Aqua (0,255,255)
Violet (120,0,255)
Red (255,0,0)
Orange (255,140,0)
Yellow (255,255,0)
Fuchsia (255,0,255)
White (255,255,255)
Peach (255,128,128)
LightBlue (128,128,255)
Brown (165,42,42)
Olive (192,192,0)
Green (0,128,0)
Navy (0,0,128)

Note that the numerical values in parentheses are gradation values from 0 to 255 of (R, G, B). It goes without saying that the colors are not limited to these gradation values and the method of defining the light emission color is not limited. An arbitrary color may be set as the illumination color, and the illumination color may be realized by an arbitrary method.

As described above, in the content reproduction system 100 according to this embodiment, the illumination control information 65 associated with the audio data 66 is generated. The synchronization control information (packet 70) including the generated illumination control information 65 and the audio data 66 is transmitted to the different reproduction apparatus 10. Accordingly, it is possible to execute, on the basis of the synchronization control information, synchronous reproduction (multi-room reproduction) of audio content and synchronous control of the illumination unit 13. As a result, it is possible to provide a viewing experience with high quality to a user.

As a presentation function of livening up the party scene, not only powerful audio reproduction but also the function of reproducing the LED illumination or the like mounted on the main body in accordance with music is very effective. As described above, the audio signal to be reproduced is analyzed by the CPU or the like of the main body in real time, and the illumination pattern and the light emission timing are determined each time. Accordingly, it is possible to execute illumination control synchronized with reproduction of audio content with high precision.

In general, music often has a certain melody pattern to be periodically repeated. Therefore, if the same algorithm is used for determining the illumination pattern, the same lighting will be executed each time. For this reason, although it is a special party performance, there is a high possibility that the user gets bored. In this embodiment, as described above, random numbers are incorporated in a part of the algorithm, which prevents the same illumination pattern from being selected every time. As a result, it is possible to sufficiently prevent the excitement and uplifting feeling from cooling down.

Note that also in the case where only audio data is transmitted from the master apparatus 10a to the slave apparatus 10b, each reproduction apparatus 10 executes audio analysis, and illumination information is generated, it is possible to provide a fun viewing experience. However, with this method, there is a possibility that deviation of random numbers adopted in the algorithm, timing of analyzing the audio data, and the like occur. In this case, even in the case where the same song is analyzed, the illumination pattern, color, and light emission timing to be determined differ in the reproduction apparatuses 10. That is, there is a possibility that the precision of synchronous control of the illumination unit 13 is reduced.

In this embodiment, the synchronization control information generated by the master apparatus 10a is transmitted to each slave apparatus 10b. The slave apparatus 10b executes audio reproduction and drives the illumination unit 13 on the basis of the received synchronization control information. As a result, synchronous control of the illumination unit 13 with very high precision is realized, and it is possible to provide a viewing experience with high quality. For example, it is possible to obtain a high-presence party experience close to the atmosphere of a live show venue where artists actually appear.

Further, in this embodiment, as shown in Fig. 8 and the like, the illumination control information is generated at the timing when the reproduction state is changed, and no illumination control information is generated in the case of the loop in which the reproduction state is not changed. Therefore, it is possible to sufficiently reduce the amount of information of the illumination control information as compared to the audio data. Accordingly, it is possible to add the illumination control information to the header of the packet of the audio data. As a result, since it is possible to execute synchronous control of an illumination unit with only the packet of the audio data, it is possible to easily execute synchronous control and easily manage the data.

Note that the present technology is not limited to the case where synchronization control information including audio data and illumination control information is generated as a packet. For example, the present technology is applicable also to a case where audio data and illumination control information are separately distributed.

Further, in this embodiment, the main illumination unit 13a, the top illumination unit 13b, the bottom illumination unit 13c, and the woofer illumination unit 13d are set in each reproduction apparatus 10. For example, as the plurality of reproduction apparatuses 10 forming a group, apparatuses of different models are often used. For example, there may be the slave apparatus 10b of a model different from that of the master apparatus 10a. Therefore, a plurality of illumination groups are classified on the basis of physical positions, and illumination control information is generated for each illumination group. Accordingly, synchronous control between the main illumination units 13a, synchronous control between the woofer illumination units 13d, and the like can be executed even in apparatuses of different models. That is, it is possible to improve the sense of unit through synchronous control of the illumination unit, and make the atmosphere uniform.

### <Other Embodiments>

The present technology is not limited to the above-mentioned embodiment, and various other embodiments can be realized.

For example, the illumination control information for realizing the synchronous control of the illumination unit, the generation method therefor, and the like are not limited. For example, not only the above-mentioned beat detection but also the music elements such as the volume, rhythm, and the like of audio data may be analyzed, and illumination control information including an illumination pattern and an illumination color suitable therefor may be generated.

Further, for example, illumination control information may be generated on the basis of the states of the reproduction apparatuses forming a group. For example, when forming a group, information regarding the volume value of each reproduction apparatus is acquired. The master apparatus creates illumination control information on the basis of the volume value of its own or the volume value of another slave apparatus. For example, for a reproduction apparatus having a large volume value, illumination control information is generated so that flashy illumination can be obtained. For a reproduction apparatus having a small volume, illumination control information is generated so that calm illumination can be obtained.

Further, illumination control information may be generated on the basis of the installation environment of each reproduction apparatus. The information regarding the installation environment is transmitted from a slave apparatus or appropriately input by a user, for example. For example, flashy illumination is obtained for a reproduction apparatus installed in the main venue, and calm illumination is obtained for a reproduction apparatus installed in a space where the user rests. Alternatively, bluish illumination is obtained for a reproduction apparatus installed in the waterside, and reddish illumination is obtained for a reproduction apparatus installed near the flame. By taking the state of the reproduction apparatus into consideration as described above, it is possible to provide a viewing experience with high quality.

The reproduction method by the master apparatus described above may be executed by the cooperation of the master apparatus and another computer or the like. For example, execution of each process included in the reproduction method includes causing another computer or the like to execute a part or all of the processing and acquiring the result. That is, the present technology is applicable also to the configuration of cloud computing in which the processing is shared by a plurality of apparatuses and executed in cooperation with each other.

At least two features of the above-mentioned features according to the present technology may be combined. That is, various features described in each embodiment may be arbitrarily combined without distinguishing the embodiments with each other. Further, the various effects described above are merely examples and are not limited, and additional effects may be exerted.

- 10: reproduction apparatus
- 10a: master apparatus
- 10b: slave apparatus
- 12: speaker unit
- 12a: woofer
- 12b: squawker
- 12c: tweeter
- 13: illumination unit
- 13a: main illumination unit
- 13b: top illumination unit
- 13c: bottom illumination unit
- 13d: a woofer illumination unit
- 20, 21: content server
- 30: portable terminal
- 41: communication unit
- 42: storage unit
- 48: control unit
- 52: reproduction control unit
- 56: audio analysis unit
- 58: beat detection unit
- 59: state machine
- 65: illumination control information
- 66: audio data
- 67: time stamp
- 68: ID table
- 70: packet
- 71: header unit
- 72: data unit
- 100: content reproduction system

## Claims

1. A reproduction apparatus (10a) capable of executing synchronous reproduction of audio content with a different reproduction apparatus (10b), the reproduction apparatus comprising:
an illumination unit (13);
an acquisition unit (41) configured to acquire audio information (66);
a generation unit (56) configured to generate illumination control information (65) associated with the acquired audio information (66), wherein the generation unit (56) is configured to classify the illumination unit (13) into a plurality of classified illumination units (13a; 13b; 13c; 13d) in accordance with predetermined rules, and to generate the illumination control information (65) in association with classification designation information for designating each of the plurality of classified illumination units, wherein the plurality of classified illumination units (13a; 13b; 13c; 13d) are classified on a basis of installation positions;
a transmission unit (41) configured to transmit, to the different reproduction apparatus (10b), synchronization control information that includes the audio information and the illumination control information;
a synchronization control unit (52) configured to execute synchronous reproduction of the audio content with the different reproduction apparatus and synchronous control of the illumination unit, on a basis of the synchronization control information.

2. The reproduction apparatus (10a) according to claim 1, wherein
the generation unit (56) is configured to generate, as the synchronization control information, a packet (70) of the audio information, the packet having a header (71) to which the illumination control information (65) is added.

3. The reproduction apparatus (10a) according to any one of the previous claims, wherein
the generation unit (56) is configured to generate the illumination control information (65) by analyzing the acquired audio information (66).

4. The reproduction apparatus (10a) according to any one of the previous claims, wherein
the illumination control information (65) includes a plurality of illumination patterns and start timings of the plurality of illumination patterns.

5. The reproduction apparatus (10a) according to claim 4, wherein
the illumination control information (65) includes an illumination color.

6. The reproduction apparatus (10a) according to claim 4 or 5, wherein
the generation unit (56) is configured to classify the audio content into a plurality of reproduction states on a basis of the audio information (66), and to associate the plurality of reproduction states with illumination patterns.

7. The reproduction apparatus (10a) according to claim 6, wherein
the generation unit (56) is configured to classify the plurality of reproduction states on a basis of beat included in the audio content.

8. The reproduction apparatus (10a) according to any one of the previous claims, wherein
the generation unit (56) is configured to generate the illumination control information (65) in association with apparatus designation information for designating the different reproduction apparatus.

9. The reproduction apparatus (10a) according to any one of the previous claims, wherein
the plurality of classified illumination units (13a; 13b; 13c; 13d) include a main illumination unit, an upper-side illumination unit, a lower-side illumination unit, and a speaker illumination unit.

10. The reproduction apparatus (10a) according to any one of the previous claims, wherein
the generation unit (56) is configured to generate the illumination control information (65) on a basis of a state of the different reproduction apparatus.

11. The reproduction apparatus (10a) according to claim 10, wherein
the generation unit (56) is configured to generate the illumination control information (65) on a basis of volume of the different reproduction apparatus.

12. The reproduction apparatus (10a) according to claim 10 or 11, wherein
the generation unit (56) is configured to generate the illumination control information (65) on a basis of an installation environment of the different reproduction apparatus.

13. A reproduction method by a reproduction apparatus (10a) including an illumination unit (13), comprising;
acquiring audio information (66);
generating illumination control information (65) associated with the acquired audio information, wherein generating the illumination control information (65) comprises classifying the illumination unit (13) into a plurality of classified illumination units (13a; 13b; 13c; 13d) in accordance with predetermined rules, and generating the illumination control information (65) in association with classification designation information for designating each of the plurality of classified illumination units (13a; 13b; 13c; 13d), wherein the plurality of classified illumination units (13a; 13b; 13c; 13d) are classified on a basis of installation positions;
transmitting, to a different reproduction apparatus (10b), synchronization control information that includes the audio information (66) and the illumination control information (65); and
executing synchronous reproduction of the audio content with the different reproduction apparatus (10b) and synchronous control of the illumination unit (13), on a basis of the synchronization control information.

14. A program that causes a reproduction apparatus (10a) including an illumination unit (13) to execute the steps of:
acquiring audio information (66);
generating illumination control information (65) associated with the acquired audio information, wherein generating the illumination control information (65) comprises classifying the illumination unit (13) into a plurality of classified illumination units (13a; 13b; 13c; 13d) in accordance with predetermined rules, and generating the illumination control information (65) in association with classification designation information for designating each of the plurality of classified illumination units (13a; 13b; 13c; 13d), wherein the plurality of classified illumination units (13a; 13b; 13c; 13d) are classified on a basis of installation positions;
transmitting, to a different reproduction apparatus (10b), synchronization control information that includes the audio information (66) and the illumination control information (65); and
executing synchronous reproduction of the audio content with the different reproduction apparatus (10b) and synchronous control of the illumination unit (13), on a basis of the synchronization control information.

15. A reproduction system, comprising:
a reproduction apparatus (10a); and
a different reproduction apparatus (10b), wherein
the reproduction apparatus (10a) includes
an illumination unit (13),
an acquisition unit (41) configured to acquire audio information (66),
a generation unit (56) configured to generate illumination control information (65) associated with the acquired audio information (66), wherein the generation unit (56) is configured to classify the illumination unit (13) into a plurality of classified illumination units (13a; 13b; 13c; 13d) in accordance with predetermined rules, and to generate the illumination control information (65) in association with classification designation information for designating each of the plurality of classified illumination units, wherein the plurality of classified illumination units (13a; 13b; 13c; 13d) are classified on a basis of installation positions,
a transmission unit (41) configured to transmit, to the different reproduction apparatus (10b), synchronization control information that includes the audio information (66) and the illumination control information (65), and
a synchronization control unit configured to execute synchronous reproduction of the audio content with the different reproduction apparatus (10b) and synchronous control of the illumination unit (13), on a basis of the synchronization control information, and
the different reproduction apparatus (10b) includes
a reception unit configured to receive the synchronization control information transmitted from the reproduction apparatus (10a), and
a synchronization control unit configured to execute synchronous reproduction of the audio content with the reproduction apparatus and synchronous control of the illumination unit, on a basis of the received synchronization control information.

## Patentansprüche

1. Wiedergabevorrichtung (10a), die in der Lage ist, eine synchrone Wiedergabe von Audioinhalten mit einer anderen Wiedergabevorrichtung (10b) auszuführen, wobei die Wiedergabevorrichtung umfasst:
eine Beleuchtungseinheit (13);
eine Erfassungseinheit (41), die dazu ausgelegt ist, Audioinformationen (66) zu erfassen;
eine Erzeugungseinheit (56), die dazu ausgelegt ist, Beleuchtungssteuerungsinformationen (65) in Zusammenhang mit den erfassten Audioinformationen (66) zu erzeugen, wobei die Erzeugungseinheit (56) dazu ausgelegt ist, die Beleuchtungseinheit (13) gemäß vorbestimmter Regeln in eine Vielzahl von klassifizierten Beleuchtungseinheiten (13a; 13b; 13c; 13d) zu klassifizieren und die Beleuchtungssteuerungsinformationen (65) in Zusammenhang mit Klassifizierungsbezeichnungsinformationen zum Bezeichnen jeder der Vielzahl von klassifizierten Beleuchtungseinheiten zu erzeugen, wobei die Vielzahl von klassifizierten Beleuchtungseinheiten (13a; 13b; 13c; 13d) auf Grundlage von Installationspositionen klassifiziert werden;
eine Übertragungseinheit (41), die dazu ausgelegt ist, an die andere Wiedergabevorrichtung (10b) Synchronisationssteuerungsinformationen zu übertragen, die die Audioinformationen und die Beleuchtungssteuerungsinformationen enthalten;
eine Synchronisationssteuerungseinheit (52), die dazu ausgelegt ist, eine synchrone Wiedergabe der Audioinhalte mit der anderen Wiedergabevorrichtung und eine synchrone Steuerung der Beleuchtungseinheit auf Grundlage der Synchronisationssteuerungsinformationen auszuführen.

2. Wiedergabevorrichtung (10a) gemäß Anspruch 1, wobei
die Erzeugungseinheit (56) dazu ausgelegt ist, als Synchronisationssteuerungsinformationen ein Paket (70) der Audioinformationen zu erzeugen, wobei das Paket einen Kopfbereich (71) aufweist, dem die Beleuchtungssteuerungsinformationen (65) hinzugefügt sind.

3. Wiedergabevorrichtung (10a) gemäß einem der vorhergehenden Ansprüche, wobei
die Erzeugungseinheit (56) dazu ausgelegt ist, die Beleuchtungssteuerungsinformationen (65) durch Analysieren der erfassten Audioinformationen (66) zu erzeugen.

4. Wiedergabevorrichtung (10a) gemäß einem der vorhergehenden Ansprüche, wobei
die Beleuchtungssteuerungsinformationen (65) eine Vielzahl von Beleuchtungsmustern und Startzeiten der Vielzahl von Beleuchtungsmustern enthalten.

5. Wiedergabevorrichtung (10a) gemäß Anspruch 4, wobei
die Beleuchtungssteuerungsinformationen (65) eine Beleuchtungsfarbe enthalten.

6. Wiedergabevorrichtung (10a) gemäß Anspruch 4 oder 5, wobei
die Erzeugungseinheit (56) dazu ausgelegt ist, die Audioinhalte auf Grundlage der Audioinformationen (66) in eine Vielzahl von Wiedergabezuständen zu klassifizieren und die Vielzahl von Wiedergabezuständen mit Beleuchtungsmustern zu verknüpfen.

7. Wiedergabevorrichtung (10a) gemäß Anspruch 6, wobei
die Erzeugungseinheit (56) dazu ausgelegt ist, die Vielzahl von Wiedergabezuständen auf Grundlage des in den Audioinhalten enthaltenen Taktes zu klassifizieren.

8. Wiedergabevorrichtung (10a) gemäß einem der vorhergehenden Ansprüche, wobei
die Erzeugungseinheit (56) dazu ausgelegt ist, die Beleuchtungssteuerungsinformationen (65) in Zusammenhang mit Vorrichtungsbezeichnungsinformationen zum Bezeichnen der anderen Wiedergabevorrichtung zu erzeugen.

9. Wiedergabevorrichtung (10a) gemäß einem der vorhergehenden Ansprüche, wobei
die Vielzahl von klassifizierten Beleuchtungseinheiten (13a; 13b; 13c; 13d) eine Hauptbeleuchtungseinheit, eine Oberseitenbeleuchtungseinheit, eine Unterseitenbeleuchtungseinheit und eine Lautsprecherbeleuchtungseinheit enthalten.

10. Wiedergabevorrichtung (10a) gemäß einem der vorhergehenden Ansprüche, wobei
die Erzeugungseinheit (56) dazu ausgelegt ist, die Beleuchtungssteuerungsinformationen (65) auf Grundlage eines Zustands der anderen Wiedergabevorrichtung zu erzeugen.

11. Wiedergabevorrichtung (10a) gemäß Anspruch 10, wobei
die Erzeugungseinheit (56) dazu ausgelegt ist, die Beleuchtungssteuerungsinformationen (65) auf Grundlage der Lautstärke der anderen Wiedergabevorrichtung zu erzeugen.

12. Wiedergabevorrichtung (10a) gemäß Anspruch 10 oder 11, wobei
die Erzeugungseinheit (56) dazu ausgelegt ist, die Beleuchtungssteuerungsinformationen (65) auf Grundlage einer Installationsumgebung der anderen Wiedergabevorrichtung zu erzeugen.

13. Wiedergabeverfahren durch eine Wiedergabevorrichtung (10a) mit einer Beleuchtungseinheit (13), umfassend;
Erfassen von Audioinformationen (66);
Erzeugen von Beleuchtungssteuerungsinformationen (65), die mit den erfassten Audioinformationen verknüpft sind, wobei das Erzeugen der Beleuchtungssteuerungsinformationen (65) das Klassifizieren der Beleuchtungseinheit (13) in eine Vielzahl von klassifizierten Beleuchtungseinheiten (13a; 13b; 13c; 13d) gemäß vorbestimmter Regeln und das Erzeugen der Beleuchtungssteuerungsinformationen (65) in Zusammenhang mit Klassifizierungsbezeichnungsinformationen zum Bezeichnen jeder der Vielzahl von klassifizierten Beleuchtungseinheiten (13a; 13b; 13c; 13d) umfasst, wobei die Vielzahl von klassifizierten Beleuchtungseinheiten (13a; 13b; 13c; 13d) auf Grundlage von Installationspositionen klassifiziert werden;
Übertragen von Synchronisationssteuerungsinformationen, die die Audioinformationen (66) und die Beleuchtungssteuerungsinformationen (65) enthalten, an eine andere Wiedergabevorrichtung (10b); und
Ausführen einer synchronen Wiedergabe der Audioinhalte mit der anderen Wiedergabevorrichtung (10b) und einer synchronen Steuerung der Beleuchtungseinheit (13) auf Grundlage der Synchronisationssteuerungsinformationen.

14. Programm, das eine Wiedergabevorrichtung (10a), mit einer Beleuchtungseinheit (13) veranlasst, die folgenden Schritte auszuführen:
Erfassen von Audioinformationen (66);
Erzeugen von Beleuchtungssteuerungsinformationen (65), die mit den erfassten Audioinformationen verknüpft sind, wobei das Erzeugen der Beleuchtungssteuerungsinformationen (65) das Klassifizieren der Beleuchtungseinheit (13) in eine Vielzahl von klassifizierten Beleuchtungseinheiten (13a; 13b; 13c; 13d) gemäß vorbestimmter Regeln und das Erzeugen der Beleuchtungssteuerungsinformationen (65) in Zusammenhang mit Klassifizierungsbezeichnungsinformationen zum Bezeichnen jeder der Vielzahl von klassifizierten Beleuchtungseinheiten (13a; 13b; 13c; 13d) umfasst, wobei die Vielzahl von klassifizierten Beleuchtungseinheiten (13a; 13b; 13c; 13d) auf Grundlage von Installationspositionen klassifiziert werden;
Übertragen von Synchronisationssteuerungsinformationen, die die Audioinformationen (66) und die Beleuchtungssteuerungsinformationen (65) enthalten, an eine andere Wiedergabevorrichtung (10b); und
Ausführen einer synchronen Wiedergabe der Audioinhalte mit der anderen Wiedergabevorrichtung (10b) und einer synchronen Steuerung der Beleuchtungseinheit (13) auf Grundlage der Synchronisationssteuerungsinformationen.

15. Wiedergabesystem, umfassend:
eine Wiedergabevorrichtung (10a); und
eine andere Wiedergabevorrichtung (10b), wobei die Wiedergabevorrichtung (10a) enthält:
eine Beleuchtungseinheit (13),
eine Erfassungseinheit (41), die dazu ausgelegt ist, Audioinformationen (66) zu erfassen;
eine Erzeugungseinheit (56), die dazu ausgelegt ist, Beleuchtungssteuerungsinformationen (65) in Zusammenhang mit den erfassten Audioinformationen (66) zu erzeugen, wobei die Erzeugungseinheit (56) dazu ausgelegt ist, die Beleuchtungseinheit (13) gemäß vorbestimmter Regeln in eine Vielzahl von klassifizierten Beleuchtungseinheiten (13a; 13b; 13c; 13d) zu klassifizieren und die Beleuchtungssteuerungsinformationen (65) in Zusammenhang mit Klassifizierungsbezeichnungsinformationen zum Bezeichnen jeder der Vielzahl von klassifizierten Beleuchtungseinheiten zu erzeugen, wobei die Vielzahl von klassifizierten Beleuchtungseinheiten (13a; 13b; 13c; 13d) auf Grundlage von Installationspositionen klassifiziert werden,
eine Übertragungseinheit (41), die dazu ausgelegt ist, an die andere Wiedergabevorrichtung (10b) Synchronisationssteuerungsinformationen zu übertragen, die die Audioinformationen (66) und die Beleuchtungssteuerungsinformationen (65) enthalten; und
eine Synchronisationssteuerungseinheit, die dazu ausgelegt ist, eine synchrone Wiedergabe der Audioinhalte mit der anderen Wiedergabevorrichtung (10b) und eine synchrone Steuerung der Beleuchtungseinheit (13) auf Grundlage der Synchronisationssteuerungsinformationen auszuführen, und
die andere Wiedergabevorrichtung (10b) enthält:
eine Empfangseinheit, die dazu ausgelegt ist, die aus der Wiedergabevorrichtung (10a) übertragenen Synchronisationssteuerungsinformationen zu empfangen, und
eine Synchronisationssteuerungseinheit, die dazu ausgelegt ist, eine synchrone Wiedergabe der Audioinhalte mit der Wiedergabevorrichtung und eine synchrone Steuerung der Beleuchtungseinheit auf Grundlage der Synchronisationssteuerungsinformationen auszuführen.

## Revendications

1. Appareil de reproduction (10a) capable d'exécuter une reproduction synchrone d'un contenu audio avec un autre appareil de reproduction (10b), l'appareil de reproduction comprenant :
une unité d'éclairage (13) ;
une unité d'acquisition (41) configurée pour acquérir des informations audio (66) ;
une unité de génération (56) configurée pour générer des informations de commande d'éclairage (65) associées aux informations audio acquises (66), l'unité de génération (56) étant configurée pour classifier l'unité d'éclairage (13) en une pluralité d'unités d'éclairage classifiées (13a ; 13b ; 13c ; 13d) conformément à des règles prédéterminées, et générer les informations de commande d'éclairage (65) en association avec des informations de désignation de classification pour désigner chacune de la pluralité d'unités d'éclairage classifiées, la pluralité d'unités d'éclairage classifiées (13a ; 13b ; 13c ; 13d) étant classifiée en fonction de positions d'installation ;
une unité de transmission (41) configurée pour transmettre, à l'autre appareil de reproduction (10b) des informations de commande de synchronisation qui comportent les informations audio et les informations de commande d'éclairage ;
une unité de commande de synchronisation (52) configurée pour exécuter une reproduction synchrone du contenu audio avec l'autre appareil de reproduction et une commande synchrone de l'unité d'éclairage, en fonction des informations de commande de synchronisation.

2. Appareil de reproduction (10a) selon la revendication 1, dans lequel
l'unité de génération (56) est configurée pour générer, comme informations de commande de synchronisation, un paquet (70) des informations audio, le paquet présentant un en-tête (71) auquel sont ajoutées les informations de commande d'éclairage (65).

3. Appareil de reproduction (10a) selon l'une quelconque des revendications précédentes, dans lequel
l'unité de génération (56) est configurée pour générer des informations de commande d'éclairage (65) en analysant les informations audio acquises (66).

4. Appareil de reproduction (10a) selon l'une quelconque des revendications précédentes, dans lequel
les informations de commande d'éclairage (65) comportent une pluralité de modèles d'éclairage et de temps de démarrage de la pluralité de modèles d'éclairage.

5. Appareil de reproduction (10a) selon la revendication 4, dans lequel
les informations de commande d'éclairage (65) comportent une couleur d'éclairage.

6. Appareil de reproduction (10a) selon la revendication 4 ou 5, dans lequel
l'unité de génération (56) est configurée pour classifier le contenu audio en une pluralité d'états de reproduction en fonction des informations audio (66), et associer la pluralité d'états de reproduction à des modèles d'éclairage.

7. Appareil de reproduction (10a) selon la revendication 6, dans lequel
l'unité de génération (56) est configurée pour classifier la pluralité d'états de reproduction en fonction d'un rythme inclus dans le contenu audio.

8. Appareil de reproduction (10a) selon l'une quelconque des revendications précédentes, dans lequel
l'unité de génération (56) est configurée pour générer les informations de commande d'éclairage (65) en association avec des informations de désignation d'appareil pour désigner l'autre appareil de reproduction.

9. Appareil de reproduction (10a) selon l'une quelconque des revendications précédentes, dans lequel
la pluralité d'unités d'éclairage classifiées (13a ; 13b ; 13c ; 13d) comporte une unité d'éclairage principale, une unité d'éclairage supérieure, une unité d'éclairage inférieure, et une unité d'éclairage de haut-parleur.

10. Appareil de reproduction (10a) selon l'une quelconque des revendications précédentes, dans lequel
l'unité de génération (56) est configurée pour générer les informations de commande d'éclairage (65) en fonction d'un état de l'autre appareil de reproduction.

11. Appareil de reproduction (10a) selon la revendication 10, dans lequel
l'unité de génération (56) est configurée pour générer les informations de commande d'éclairage (65) en fonction d'un volume de l'autre appareil de reproduction.

12. Appareil de reproduction (10a) selon la revendication 10 ou 11, dans lequel
l'unité de génération (56) est configurée pour générer les informations de commande d'éclairage (65) en fonction d'un environnement d'installation de l'autre appareil de reproduction.

13. Procédé de reproduction par un appareil de reproduction (10a) comportant une unité d'éclairage (13), comprenant :
l'acquisition d'informations audio (66) ;
la génération d'informations de commande d'éclairage (65) associées aux informations audio acquises, la génération des informations de commande d'éclairage (65) comprenant la classification de l'unité d'éclairage (13) en une pluralité d'unités d'éclairage classifiées (13a ; 13b ; 13c ; 13d) conformément à des règles prédéterminées, et la génération des informations de commande d'éclairage (65) en association avec des informations de désignation de classification pour désigner chacune de la pluralité d'unités d'éclairage classifiées (13a ; 13b ; 13c ; 13d), la pluralité d'unités d'éclairage classifiées (13a ; 13b ; 13c ; 13d) étant classifiée en fonction de positions d'installation ;
la transmission, à un autre appareil de reproduction (10b), d'informations de commande de synchronisation qui comportent les informations audio (66) et les informations de commande d'éclairage (65) ; et
l'exécution d'une reproduction synchrone du contenu audio avec l'autre appareil de reproduction (10b) et la commande synchrone de l'unité d'éclairage (13), en fonction des informations de commande de synchronisation.

14. Programme amenant un appareil de reproduction (10a) comportant une unité d'éclairage (13) à exécuter les étapes suivantes :
l'acquisition d'informations audio (66) ;
la génération d'informations de commande d'éclairage (65) associées aux informations audio acquises, la génération des informations de commande d'éclairage (65) comprenant la classification de l'unité d'éclairage (13) en une pluralité d'unités d'éclairage classifiées (13a ; 13b ; 13c ; 13d) conformément à des règles prédéterminées, et la génération des informations de commande d'éclairage (65) en association avec des informations de désignation de classification pour désigner chacune de la pluralité d'unités d'éclairage classifiées (13a ; 13b ; 13c ; 13d), la pluralité d'unités d'éclairage classifiées (13a ; 13b ; 13c ; 13d) étant classifiée en fonction de positions d'installation ;
la transmission, à un autre appareil de reproduction (10b), d'informations de commande de synchronisation qui comportent les informations audio (66) et les informations de commande d'éclairage (65) ; et
l'exécution d'une reproduction synchrone du contenu audio avec l'autre appareil de reproduction (10b) et la commande synchrone de l'unité d'éclairage (13), en fonction des informations de commande de synchronisation.

15. Système de reproduction, comprenant :
un appareil de reproduction (10a) ; et
un autre appareil de reproduction (10b), dans lequel l'appareil de reproduction (10a) comporte :
une unité d'éclairage (13) ;
une unité d'acquisition (41) configurée pour acquérir des informations audio (66) ;
une unité de génération (56) configurée pour générer des informations de commande d'éclairage (65) associées aux informations audio acquises (66), l'unité de génération (56) étant configurée pour classifier l'unité d'éclairage (13) en une pluralité d'unités d'éclairage classifiées (13a ; 13b ; 13c ; 13d) conformément à des règles prédéterminées, et générer les informations de commande d'éclairage (65) en association avec des informations de désignation de classification pour désigner chacune de la pluralité d'unités d'éclairage classifiées, la pluralité d'unités d'éclairage classifiées (13a ; 13b ; 13c ; 13d) étant classifiée en fonction de positions d'installation ;
une unité de transmission (41) configurée pour transmettre, à l'aure appareil de reproduction (lOb), des informations de commande de synchronisation qui comportent les informations audio (66) et les informations de commande d'éclairage (65) ; et
une unité de commande de synchronisation configurée pour exécuter une reproduction synchrone du contenu audio avec l'autre appareil de reproduction (10b) et une commande synchrone de l'unité d'éclairage (13), en fonction des informations de commande de synchronisation, et
l'autre appareil de reproduction (10b) comporte
une unité de réception configurée pour recevoir les informations de commande de synchronisation transmises par l'appareil de reproduction (10a), et
une unité de commande de synchronisation configurée pour exécuter une reproduction synchrone du contenu audio avec l'appareil de reproduction et une commande synchrone de l'unité d'éclairage, en fonction des informations de commande de synchronisation reçues.
